# EUROPEAN PATENT SPECIFICATION

(11) **EP 4 282 662 B1**
(45) Date of publication and mention of the grant of the patent: **30.07.2025**
(21) Application number: 22745844.5
(22) Date of filing: 25.01.2022
(51) Int. Cl.: B41M 1/30, C09D 11/101, B41M 3/00, B41M 7/00, C09D 11/037, C09D 11/10, B41M 1/06, B41M 1/18, B41M 5/00

(54) **ACTIVE ENERGY RAY-CURABLE PLANOGRAPHIC PRINTING INK SET, METHOD FOR MANUFACTURING PRINTED MATTER, AND ACTIVE ENERGY RAY-CURABLE PLANOGRAPHIC PRINTING INK**
AKTIVENERGIESTRAHLENHÄRTBARER FLACHDRUCKTINTENSATZ, VERFAHREN ZUR HERSTELLUNG VON DRUCKSACHEN UND AKTIVENERGIESTRAHLENHÄRTBARE FLACHDRUCKTINTE
ENSEMBLE D'ENCRES D'IMPRESSION PLANOGRAPHIQUE DURCISSABLE PAR RAYONNEMENT D'ÉNERGIE ACTIVE, PROCÉDÉ DE FABRICATION DE MATIÈRE IMPRIMÉE, ET ENCRE D'IMPRESSION PLANOGRAPHIQUE DURCISSABLE PAR RAYONNEMENT D'ÉNERGIE ACTIVE

(30) Priority: 29.01.2021 JP 2021012742
(43) Date of publication of application: 29.11.2023
(73) Proprietor: Toray Industries, Inc., Tokyo 103-8666 (JP)
(72) Inventor: ITO, Akito, Otsu-shi, Shiga 520-8558 (JP); KOSHIMIZU, Noboru, Otsu-shi, Shiga 520-8558 (JP); INOUE, Takejiro, Otsu-shi, Shiga 520-8558 (JP)
(74) Representative: Prüfer & Partner mbB Patentanwälte · Rechtsanwälte
(86) International application number: PCT/JP2022/002580
(87) International publication number: WO 2022/163623

(56) References cited:
- EP-A1- 1 762 600
- EP-A1- 3 594 293
- WO-A1-2006/003811
- WO-A1-2018/062108
- JP-A- 2007 038 540
- JP-A- 2011 252 122
- JP-A- 2018 115 232
- JP-A- 2020 084 055
- JP-A- H03 220 218

## Description

### TECHNICAL FIELD

The present invention relates to an active energy ray-curable lithographic printing ink set, a method for producing a printed material, and an active energy ray-curable lithographic printing ink.

### BACKGROUND ART

Lithographic printing is a printing method that has been widely used as a system for supplying printed materials at high speed, large amount, and low cost. In particular, in recent years, the use of active energy ray-curable lithographic printing using a light source such as a mercury lamp or a metal halide lamp has spread in many fields due to high productivity.

In the related art, lithographic printing has been often performed on paper, but printing on plastic films is also spreading due to diversification of printing application types. In particular, in recent years, attempts have been started to carry out soft packaging printing using a thin film as a base material and used for applications such as daily goods, foodstuffs, and pharmaceuticals by lithographic printing.

An active energy ray-curable lithographic printing ink generally has a viscosity 100 times or more higher than that of a gravure ink used for soft packaging printing, and is instantaneously cured by irradiation with an active energy ray, so that there is no time for the ink to wet and spread, and there is a tendency that a void print or irregularities on the surface of an ink film are likely to occur in a printed material. On the other hand, an active energy ray-curable lithographic printing ink having excellent fluidity is disclosed (Patent Document 1).

### PRIOR ART DOCUMENTS

### PATENT DOCUMENTS

Patent Document 1: Japanese Patent Laid-open Publication No. 2018-83864

### SUMMARY OF INVENTION

### PROBLEMS TO BE SOLVED BY THE INVENTION

However, the ink according to Patent Document 1 tends to have difficulty in achieving both opacity and superimposition of inks.

Therefore, an object of the present invention is to overcome the problems of the prior art, and to provide an active energy ray-curable lithographic printing ink set excellent in high opacity of a printed material and also in superimposition of inks at the time of printing, and a method for producing a printed material using the same.

### SOLUTIONS TO THE PROBLEMS

The present inventors have paid attention to the fact that when pigment concentration in the ink is increased in order to improve the opacity, a tack value of the ink increases, the pre-printed ink is stripped off, and the superimposition of the inks becomes poor, and have completed the present invention.

That is, the present invention provides an active energy ray-curable lithographic printing ink set including at least one ink of black or chromatic color including at least any one of a black pigment, a cyan pigment, a magenta pigment, and a yellow pigment, and a white ink including a white pigment, wherein at least one of the ink of black or chromatic color is the black/chromatic ink (1) having a tack value of 5.0 or more and 12.0 or less at 400 rpm measured with an inkometer at 38°C, and the white ink has a tack value of 1.0 or more and 5.0 or less at 400 rpm measured with an inkometer at 38°C.

The present invention also provides a method for producing a printed material, the method including: a step of applying at least one of the black/chromatic ink (1) on a substrate using the active energy ray-curable printing ink set according to the present invention; a step of applying the white ink on the substrate to which the black/chromatic ink (1) is applied; and a step of curing using an active energy ray.

Further, the present invention is an active energy ray-curable lithographic printing ink containing a resin (a); a polyfunctional (meth)acrylate (b); a white pigment (c); and a monofunctional alkyl (meth)acrylate (d), in which a content of the white pigment (c) is 30 mass% or more and 60 mass% or less with respect to 100 mass% of a total amount of the ink, a viscosity ratio η_{WT50}/η_{WT0.5} of a viscosity η_{WT0.5} at a rotational speed of 50 rpm to a viscosity η_{WT50} at a rotational speed of 0.5 rpm measured by a cone-plate rotational viscometer at 35°C is 0.7 or more and 1.0 or less, and a tack value at 400 rpm measured by an inkometer at 38°C is 1.0 or more and 5.0 or less.

### EFFECTS OF THE INVENTION

According to the present invention, it is possible to provide an active energy ray-curable lithographic printing ink set excellent in high opacity of a printed material and also in superimposition of inks at the time of printing.

### EMBODIMENTS OF THE INVENTION

Hereinafter, embodiments of an active energy ray-curable lithographic printing ink set (hereinafter, also simply referred to as "ink set") and a method for producing a printed material according to the present invention will be described in detail. However, the present invention is not limited to the following embodiments, and may be implemented in a variety of ways depending on the purpose and application.

Note that in the present invention, "or more" means the same as or more than a numerical value indicated therein. In addition, "or less" means the same as or less than a numerical value indicated therein.

The ink set of the present invention includes at least one ink of black or chromatic color including at least any of a black pigment, a cyan pigment, a magenta pigment, and a yellow pigment, and a white ink including a white pigment. In general, a hue of printed material is expressed by combining black color, cyan color, magenta color, yellow color, and white color. The ink set of the present invention exhibits an excellent effect in the interaction between the ink of black or chromatic color and the white ink.

### [Pigment]

The ink of black or chromatic color in the ink set of the present invention contains a pigment, and one or more selected from an organic pigment and an inorganic pigment can be used.

Specific examples of the organic pigment include phthalocyanine pigments, soluble azo pigments, insoluble azo pigments, lake pigments, quinacridone pigments, isoindoline pigments, threne pigment, metal complex pigments, and more specifically, phthalocyanine blue, phthalocyanine green, azo red, monoazo red, monoazo yellow, diazo red, diazo yellow, quinacridone red, quinacridone magenta, and isoindoline yellow.

Examples of the inorganic pigment include titanium oxide, zinc oxide, alumina white, calcium carbonate, barium sulfate, red iron oxide, chrome yellow, zinc yellow, Prussian blue, ultramarine blue, oxide-coated glass powder, oxide-coated mica, oxide-coated metal particles, aluminum powder, gold powder, silver powder, bronze powder, copper powder, zinc powder, stainless steel powder, nickel powder, organic bentonite, iron oxide, carbon black, and graphite.

The concentration of the pigment contained in the ink of black or chromatic color in the ink set of the present invention is preferably 5 mass% or more. When the content is preferably 5 mass% or more, more preferably 10 mass% or more, and still more preferably 15 mass% or more, it is possible to obtain a printed sheet having a high density.

The concentration of the pigment contained in the ink of black or chromatic color is preferably 50 mass% or less. When the content is 50 mass% or less, more preferably 45 mass% or less, and still more preferably 40 mass% or less, the fluidity of the ink can be improved, and good transferability can be obtained.

### [White pigment (c)]

The white ink in the ink set of the present invention contains a white pigment (c). As the white pigment (c), there can be used one or more selected from organic pigments or inorganic pigments commonly used in a printing ink composition. Specific examples of the white pigment (c) include titanium oxide, zinc oxide, alumina white, lead carbonate, barium sulfate, zinc sulfate, and calcium carbonate. Titanium dioxide that imparts opacity to the ink is particularly preferable from the viewpoint of forming a base color of a transparent plastic film.

When titanium dioxide is used as the white pigment (c), the particle size is preferably 200 nm or more and 300 nm or less. Within this range, the transmittance of visible light can be efficiently reduced by scattering.

The content of the white pigment (c) is preferably 30 mass% or more with respect to 100 mass% of the total amount of the white ink. When the content is preferably 30 mass% or more, more preferably 35 mass% or more, and still more preferably 40 mass% or more, the opacity is improved.

The content of the white pigment (c) is preferably 60 mass% or less with respect to 100 mass% of the total amount of the white ink. When the content is 60 mass% or less, more preferably 55 mass% or less, and still more preferably 50 mass% or less, the fluidity of the white ink is improved.

### [Resin (a)]

The ink in the ink set of the present invention preferably contains a resin (a). By containing the resin (a), the cohesive force of the ink under high shear at the time of printing can be increased. When the cohesive force of the ink is increased, the ink repellency against non-image areas is enhanced, and hence as a result, the anti-scumming is improved. The scumming refers to a phenomenon in which the ink adheres to the non-image areas of the plate and is printed on the substrate to be stained.

Examples of the resin (a) contained in the ink include an acrylic resin, a styrene acrylic resin, a styrene maleic acid resin, a rosin-modified maleic acid resin, a rosin-modified acrylic resin, an epoxy resin, a polyester resin, a polyurethane resin, and a phenol resin. Among them, an acrylic resin, a styrene acrylic resin, and a styrene maleic acid resin are preferable, from the viewpoints of the availability of the monomer, its low cost, the easiness of synthesis, the compatibility with other components contained in the ink, the dispersibility of pigments thereof, and the like.

The weight average molecular weight of the resin (a) contained in the ink is preferably 5,000 or more. When the weight average molecular weight is 5,000 or more, more preferably 15,000 or more, and still more preferably 20,000 or more, the anti-scumming is improved.

The weight average molecular weight of the resin (a) contained in the ink is preferably 100,000 or less. By setting the weight average molecular weight to 100,000 or less, more preferably 75,000 or less, and still more preferably 50,000 or less, the fluidity of the ink can be maintained.

The weight average molecular weight of the resin (a) can be determined by a measurement using gel permeation chromatography (GPC) and conducting the calculation in terms of polystyrene.

The resin (a) contained in the ink preferably contains a hydrophilic group. When the ink contains the resin (a) containing a hydrophilic group, the dispersibility of the pigment is excellent. In addition, the ink can be effectively brought close to a Newtonian fluid as described later. Preferable examples of the hydrophilic group include a hydroxyl group, an amino group, a mercapto group, a carboxyl group, a sulfo group, and a phosphate group. Among them, a carboxyl group and a hydroxyl group having good dispersibility of the pigment are more preferable, and it is particularly preferable to contain at least one of a carboxyl group and a hydroxyl group.

More specifically, examples of the resin including hydrophilic group include (meth)acrylic acid copolymer, (meth)acrylic acid-(meth)acrylate copolymer, styrene-(meth)acrylic acid copolymer, styrene-(meth)acrylic acid-(meth)acrylate copolymer, styrene-maleic acid copolymer, styrene-maleic acid-(meth)acrylic acid copolymer, and styrene-maleic acid-(meth)acrylate copolymer. The "(meth)acrylic acid" is a generic term including acrylic acid and methacrylic acid.

The acid value of the resin (a) contained in the ink is preferably 30 mgKOH/g or more. When the value is 30 mgKOH/g or more, more preferably 60 mgKOH/g or more, and still more preferably 75 mgKOH/g or more, the pigment dispersibility of the ink is improved, and the anti-scumming is improved.

Further, the acid value of the resin (a) contained in the ink is preferably 250 mgKOH/g or less. When the value is 250 mgKOH/g or less, more preferably 230 mgKOH/g or less, and still more preferably 200 mgKOH/g or less, good solubility in the polyfunctional (meth)acrylate to be described later is exhibited, and the fluidity of the ink is maintained by suppressing an increase in viscosity due to polar groups.

The acid value of the resin (a) having hydrophilic group may be determined according to "3.1 neutralization titration" in the test method of JIS K 0070: 1992.

The resin (a) contained in the ink also preferably has an ethylenically unsaturated group. The ethylenically unsaturated group forms a crosslinked structure by reaction with a radical species, and the sensitivity of the ink in the ink set of the present invention to active energy rays can be improved.

An iodine value of the resin (a) contained in the ink is preferably 0.5 mol/kg or more.

When the content is 0.5 mol/kg or more, more preferably 1.0 mol/kg or more, and still more preferably 1.5 mol/kg or more, the curing sensitivity of the ink to active energy rays is improved.

In addition, the iodine value of the resin (a) contained in the ink is preferably 3.0 mol/kg or less. When the value is 3.0 mol/kg or less, more preferably 2.5 mol/kg or less, and still more preferably 2.0 mol/kg or less, the storage stability of the ink is improved.

The iodine value of the resin (a) can be adjusted by the amount of ethylenically unsaturated groups. The iodine value of the resin can be determined according to the method described in Section 6 of the test method of JIS K 0070: 1992.

The ink of black or chromatic color in the ink set of the present invention preferably contains the resin (a) in an amount of 5 mass% or more with respect to 100 mass% of the total amount of the ink of that color. When the content is 5 mass% or more, more preferably 8 mass% or more, and still more preferably 10 mass% or more, the anti-scumming of the ink is improved.

In addition, the content of the resin (a) in the ink of black or chromatic color is preferably 50 mass% or less with respect to 100 mass% of the total amount of the ink of that color. When the content is 50 mass% or less, more preferably 30 mass% or less, and still more preferably 20 mass% or less, the pigment dispersibility and fluidity of the ink can be kept good.

The white ink in the ink set of the present invention preferably contains the resin (a) in an amount of 3 mass% or more with respect to 100 mass% of the total amount of the white ink. When the content is 3 mass% or more, more preferably 4 mass% or more, and still more preferably 5 mass% or more, the anti-scumming of the ink is improved.

In addition, the content of the resin (a) in the white ink is preferably 20 mass% or less with respect to 100 mass% of the total amount of the white ink. When the content is 20 mass% or less, more preferably 15 mass% or less, and still more preferably 10 mass% or less, the pigment dispersibility and fluidity of the ink can be kept good.

### [Polyfunctional (meth)acrylate (b)]

The ink in the ink set of the present invention preferably contains polyfunctional (meth)acrylate (b). When the ink contains a polyfunctional (meth)acrylate, the sensitivity of the ink having active energy ray curability to active energy rays is increased, and the adhesion to a substrate is improved. Here, the functional number refers to the number of (meth)acryloyl groups.

Specific examples of the polyfunctional (meth)acrylate (b) contained in the ink include 1,4-butanediol di(meth)acrylate, 1,6-hexanediol di(meth)acrylate, 1,9-nonanediol di(meth)acrylate, 1,10 decanediol di(meth)acrylate, polyethylene glycol di(meth)acrylate, polypropylene glycol di(meth)acrylate, neopentyl glycol di(meth)acrylate, hydroxypivalate neopentyl glycol di(meth)acrylate, tricyclodecanedimethanol di(meth)acrylate, dicyclopentadiene tricyclodecanedimethanol di(meth)acrylate, trimethylolpropane tri(meth)acrylate, glycerin tri(meth)acrylate, pentaerythritol tetra(meth)acrylate, ditrimethylolpropane tetra(meth)acrylate, dipentaerythritol hexa(meth)acrylate, and alkylene oxide adducts thereof. Among them, 1,10 decanediol di(meth)acrylate and tricyclodecanedimethanol di(meth)acrylate are particularly preferable because they have an excellent balance between moderate compatibility with the resin (a) contained in the ink and reduction of the tack value.

It is preferable that the polyfunctional (meth)acrylate (b) contained in the ink contains a hydroxyl group because the pigment dispersibility of the ink and the adhesion to a substrate are improved. Specific examples of the polyfunctional (meth)acrylate containing a hydroxyl group include pentaerythritol tri(meth)acrylate, dipentaerythritol penta(meth)acrylate, glycerin di(meth)acrylate, diglycerin tri(meth)acrylate, diglycerin tetra(meth)acrylate, 2-hydroxy-3 acryloyloxypropyl (meth)acrylate, and alkylene oxide adducts thereof. Among them, pentaerythritol tri(meth)acrylate is particularly preferable because good compatibility with the resin (a) can be obtained and an appropriate viscosity can be imparted to the ink.

The content of the polyfunctional (meth)acrylate (b) in the ink is preferably 20 mass% or more. When the ink contains the polyfunctional (meth)acrylate (b) in an amount of 20 mass% or more, more preferably 40 mass% or more, good compatibility with the resin (a) is obtained. When the content is 90 mass% or less, more preferably 70 mass% or less, the viscosity of the ink can be adjusted, and good fluidity can be obtained.

### [Monofunctional alkyl (meth)acrylate (d)]

The white ink in the ink set of the present invention preferably contains monofunctional alkyl (meth)acrylate (d). In general, a white ink is required to have a high opacity, but when a pigment having a high concentration is contained in the ink in order to improve the opacity, the tack value of the ink increases, the pre-printed ink is peeled off, and the superimposition of the inks becomes poor. In addition, generally, as a method for decreasing the tack value, it is known to decrease the resin concentration in the ink or to add a silicone liquid. However, there was a difficulty of printing failures such that when the resin concentration in the ink is lowered, the cohesive force of the ink is lowered, so that the anti-scumming of the ink is lowered, and when a silicone liquid is added, a film of the silicone liquid is formed on the surface of the ink, so that the transferability between rollers of the ink is lowered. On the other hand, when the white ink contains the monofunctional alkyl (meth)acrylate (d), the additive functions as a non-compatible component, and can serve as a starting point of cleavage in the white ink layer without causing a decrease in the cohesive force of the ink or separation of components unnecessary for printing. That is, the tack value of the white ink can be effectively reduced while suppressing the printing failure as described above.

Specific examples of the monofunctional alkyl (meth)acrylate (d) contained in the white ink include (iso)nonyl (meth)acrylate, (iso)decyl (meth)acrylate, (iso)undecyl (meth)acrylate, (iso)dodecyl (meth)acrylate, (iso)tridecyl (meth)acrylate, (iso)tetradecyl (meth)acrylate, (iso)pentadecyl (meth)acrylate, (iso)hexadecyl (meth)acrylate, (iso)heptadecyl (meth)acrylate, (iso)octadecyl (meth)acrylate, (iso)nonadecyl (meth)acrylate, (iso)icosyl (meth)acrylate, (iso)henicosyl (meth)acrylate, and (iso)docosyl (meth)acrylate. An alkyl group of monofunctional alkyl (meth)acrylate (d) may have carbon atoms of preferably 12 to 20. Among them, (iso)octadecyl (meth)acrylate is particularly preferable from the viewpoint of greatly reducing the tack of the white ink.

The content of the monofunctional alkyl (meth)acrylate (d) in the white ink is preferably 1.0 mass% or more with respect to 100 mass% of the total amount of the inks because the tack value of the white ink can be reduced. When the content of the monofunctional alkyl (meth)acrylate (d) is 1.0 mass% or more, more preferably 2.0 mass% or more, the tack value of the white ink can be effectively reduced.

The content of the monofunctional alkyl (meth)acrylate (d) in the white ink is preferably 5.0 mass% or less with respect to 100 mass% of the total amount of the inks. By setting the content of the monofunctional alkyl (meth)acrylate (d) to 5.0 mass% or less, more preferably 4.0 mass% or less, the temporal stability of the white ink can be maintained.

### [Sugar carboxylate (e)]

The white ink in the ink set of the present invention preferably contains a sugar carboxylate (e). The sugar carboxylate (e) is formed of a sugar and a carboxylic acid. By containing the sugar carboxylate (e), the anti-scumming of the white ink can be improved.

Specific examples of the sugar carboxylate (e) include sucrose laurate, sucrose myristate, sucrose palmitate, sucrose stearate, sucrose oleate, sucrose behenate, sucrose erucate, sucrose acetate, sucrose benzoate, cellulose acetate, cellulose glycolate, and cellulose nitrate. Among them, sucrose benzoate and sucrose acetate are particularly preferable in that good compatibility with the polyfunctional (meth)acrylate (b) can be obtained.

The content of the sugar carboxylate (e) in the white ink is preferably 1.0 mass% or more with respect to 100 mass% of the total amount of the inks. By setting the content of the sugar carboxylate (e) to 1.0 mass% or more, more preferably 2.0 mass% or more, the anti-scumming of the white ink can be effectively improved.

Further, the content of the sugar carboxylate in the white ink is preferably 10.0 mass% or less with respect to 100 mass% of the total amount of the inks. By setting the content of the sugar carboxylate (e) to 10.0 mass% or less, more preferably 5.0 mass% or less, the fluidity of the white ink can be maintained.

### [Polymerization inhibitor]

The ink in the ink set of the present invention preferably contains a polymerization inhibitor. By containing the polymerization inhibitor, good storage stability of the ink can be obtained.

Specific examples of the polymerization inhibitor include hydroquinone, a monoester product of hydroquinone, N-nitrosodiphenylamine, phenothiazine, p-t-butylcatechol, N-phenylnaphthylamine, 2,6-di-t-butyl-p-methyl phenol, chloranil, and pyrogallol.

The content of the polymerization inhibitor in the ink is preferably 0.001 mass% or more. When the ink contains 0.001 mass% or more of the polymerization inhibitor, good storage stability can be effectively obtained.

In addition, the content of the polymerization inhibitor in the ink is preferably 5 mass% or more. When the content of the polymerization inhibitor in the ink is 5 mass% or less, good sensitivity can be maintained.

### [Pigment dispersant]

The ink in the ink set of the present invention preferably contains a pigment dispersant. The pigment dispersant acts on the surface of the pigment to suppress aggregation of the pigment. As a result, the pigment dispersibility is enhanced, and the fluidity of the ink can be improved.

The content of the pigment dispersant is preferably 5 parts by mass or more and 50 parts by mass or less with respect to 100 parts by mass of the pigment. Within this range, the fluidity of the ink can be effectively improved.

### [Other additives]

As the ink in the ink set of the present invention, it is possible to use other additives such as a photoinitiator, a surfactant, a wax, an antifoaming agent, a transferability improver, and a leveling agent.

### [Tack value]

At least one of the ink of black or chromatic color in the ink set of the present invention has a tack value of 5.0 or more and 12.0 or less (hereinafter, ink of black or chromatic color satisfying the requirement is also referred to as "black/chromatic ink (1)"). In addition, it is preferable that all types of ink of black or chromatic color in the ink set have a tack value of 5.0 or more and 12.0 or less, that is, correspond to the black/chromatic ink (1).

In the present invention, the tack value is determined in accordance with the test method 4.2 of JIS K 5701-1: 2000. 1.31 mL of ink weighed with an ink pipette is measured at a rotational speed of 400 rpm and an apparatus temperature of 38°C using an inkometer, and the measured value 1 minute after the start of the measurement is taken as a tack value used in the present invention. The tack value is an index representing the adhesiveness of the ink, and the higher the tack value, the higher the adhesiveness of the ink.

By setting the tack value of the ink of black or chromatic color to 5.0 or more, preferably 5.5 or more, and more preferably 6.0 or more, back trapping of the ink of black or chromatic color used as the pre-printed ink can be effectively prevented. The back trapping refers to a phenomenon in which the lower layer ink previously transferred to the substrate is peeled off by the post-printing ink. When the back trapping occurs, a printed material having a target pattern cannot be obtained, and an unclear printed material is formed, or a printing failure occurs in which a pre-printed ink is mixed with a post-printing ink, and the hue of the printed material changes between the start and end of printing.

In addition, when the tack value of the ink of black or chromatic color is less than 5.0, the ink is mixed, and the physical properties of the ink become unstable, so that the scumming occurs.

In addition, when the tack value is high, irregularities tend to occur on the surface of the ink film transferred onto the substrate, which causes a lowered glossiness of the printed material. In particular, in a printed portion in which multiple colors overlap each other, when irregularities are formed on the surface of the ink of black or chromatic color which is the lower layer ink, the surface is affected by the irregularities, and the gloss further decreases. By setting the tack value of the ink of black or chromatic color to 12.0 or less, more preferably 9.0 or less, and still more preferably 8.5 or less, it is possible to suppress a decrease in gloss of a printed portion where multiple colors superimposed.

Further, when two or more types of ink of black or chromatic color are printed, it is preferable to lower the tack value according to the printing order in order to prevent back trapping.

The white ink in the ink set of the present invention has a tack value of 1.0 or more and 5.0 or less. By setting the tack value of the white ink to 5.0 or less, preferably 4.5 or less, and more preferably 4.0 or less, back trapping can be suppressed even if the white ink is transferred onto the pre-printed ink of black or chromatic color.

By setting the tack value of the white ink to 1.0 or more, preferably 2.0 or more, more preferably 2.5 or more, it is possible to suppress a decrease in cohesive force of the ink and to improve the anti-scumming of the ink. In addition, it is possible to suppress the addition of the silicone liquid from being excessive, and it is possible to suppress the silicone liquid from forming a film on the surface of the ink to reduce the transferability between the rollers of the ink.

The tack value can be adjusted by the resin concentration in the ink. In addition, the tack value can be reduced by adding the silicone liquid.

In the ink set of the present invention, the difference in tack value between at least one of the black/chromatic ink (1) and the white ink is preferably 2.0 or more and 8.0 or less. It is more preferable that all kinds of the ink of black and the ink of chromatic color correspond to the ink of black/chromatic ink (1), and the difference between all of the ink of black/chromatic ink (1) and the white ink is 2.0 or more and 8.0 or less. By setting this difference to 2.0 or more, more preferably 2.5 or more, and still more preferably 3.0 or more, the back trapping can be effectively prevented. In addition, by setting the tack value of the pre-printed ink to 8.0 or less, more preferably 7.5 or less, and still more preferably 7.0 or less, it is possible to prevent the tack value of the pre-printed ink from increasing and the gloss of the printed material from lowering.

### [Viscosity]

In the ink set of the present invention, the viscosity η_{WT0.5} of the white ink at a rotational speed of 0.5 rpm measured with a cone-plate rotational viscometer at 35°C is preferably 30 Pa·s or less. By setting η_{WT0.5} to 30 Pa·s or less, more preferably 25 Pa·s or less, and still more preferably 20 Pa·s or less, the fluidity of the white ink is improved, the leveling property on the printed material is improved, and the opacity can be improved.

Further, η_{WT0.5} is preferably 5 Pa·s or more. By setting η_{WT0.5} to 5 Pa·s or more, good ink transferability between rollers can be obtained.

In the ink set of the present invention, the viscosity η_{WT50} of the white ink at a rotational speed of 50 rpm measured with a cone-plate rotational viscometer at 35°C is preferably 20 Pa·s or less. By setting η_{WT50} to 20 Pa·s or less, fluidity can be improved.

Further, η_{WT50} is preferably 5 Pa·s or more. By setting η_{WT50} to 5 Pa·s or more, more preferably 8 Pa·s or more, and still more preferably 10 Pa·s or more, the anti-scumming of the white ink is improved.

In the ink set of the present invention, the ratio η_{WT50}/η_{WT0.5} of the viscosity η_{WT50} at a rotational speed of 50 rpm to the viscosity η_{WT0.5} at a rotational speed of 0.5 rpm of the white ink measured with a cone-plate rotational viscometer at 35°C is preferably 0.70 or more and 1.00 or less. By setting η_{WT50/}η_{WT0.5} to 0.70 or more and 1.00 or less, more preferably 0.75 or more and 1.00 or less, and still more preferably 0.80 or more and 1.00 or less, the white ink approaches a Newtonian fluid, and a constant viscosity can be maintained regardless of shear strength. In general, high shearing is applied at the time of printing, the structural viscosity of the ink composition collapses, and the viscosity decreases. However, in the white ink in such a preferable embodiment of the present invention, viscosity reduction due to shearing is small, and high viscosity is maintained under high shearing. As a result, the cohesive force of the ink is high under high shearing as in the case of printing, and ink repulsion to a non-image area is improved, so that the anti-scumming is improved.

In the ink set of the present invention, the viscosity η_{BC0.5} of at least one of the ink of black or chromatic color at a rotational speed of 0.5 rpm measured with a cone-plate rotational viscometer at 35°C is preferably 200 Pa·s or less. By setting η_{BC0.5} to 200 Pa·s or less, more preferably 150 Pa·s or less, and still more preferably 100 Pa·s or less, the fluidity of the black or chromatic ink is improved, the leveling property on the printed material is improved, and the opacity can be improved.

Further, η_{BC0.5} is preferably 20 Pa·s or more. By setting η_{BC0.5} to 20 Pa·s or more, good ink transferability between rollers can be obtained.

In the ink set of the present invention, the viscosity η_{BC50} of at least one of the ink of black or chromatic color at a rotational speed of 50 rpm measured with a cone-plate rotational viscometer at 35°C is preferably 50 Pa·s or less. By setting η_{BC50} to 50 Pa·s or less, the fluidity can be improved.

Further, η_{BC50} is preferably 5 Pa·s or more. By setting η_{BC50} to 5 Pa·s or more, more preferably 10 Pa·s or more, and still more preferably 15 Pa·s or more, the anti-scumming of the ink of black or chromatic color is improved.

In the ink set of the present invention, a ratio η_{BC50}/η_{BC0.5} of a viscosity η_{BC50} at a rotational speed of 50 rpm to a viscosity n_{BC0.5} at a rotational speed of 0.5 rpm of at least one of ink of black or chromatic color measured with a cone-plate rotational viscometer at 35°C is preferably 0.25 or more and 0.6 or less. By setting η_{BC50}/η_{BC0.5} to 0.30 or more and 0.55 or less, more preferably 0.35 or more and 0.50 or less, the ink approaches a Newtonian fluid, and a constant viscosity can be maintained regardless of shear strength. In general, high shearing is applied at the time of printing, the structural viscosity of the ink composition collapses, and the viscosity decreases. However, in the black or chromatic ink in such a preferable embodiment of the present invention, viscosity reduction due to shearing is small, and high viscosity is maintained under high shearing. As a result, the cohesive force of the ink is high under high shearing as in the case of printing, and ink repulsion to a non-image area is improved, so that the anti-scumming is improved.

The active energy ray-curable lithographic printing ink of the present invention contains a resin (a); a polyfunctional (meth)acrylate (b); a white pigment (c); and a monofunctional alkyl (meth)acrylate (d), in which a content of the white pigment (c) is 30 mass% or more and 60 mass% or less with respect to 100 mass% of a total amount of the ink, a viscosity ratio η_{WT50/}η_{WT0.5} between a viscosity η_{WT0.5} at a rotational speed of 50 rpm and a viscosity η_{WT50} at a rotational speed of 0.5 rpm measured by a cone-plate rotational viscometer at 35°C is 0.7 or more and 1.0 or less, and a tack value at 400 rpm measured by an inkometer at 38°C is 1.0 or more and 5.0 or less.

As the technical meanings, aspects, amounts, and control means of the resin (a), the polyfunctional (meth)acrylate (b), the polymerization inhibitor, the pigment dispersant, and other additives in the active energy ray-curable lithographic printing ink of the present invention, the same ones as those described in the description of the ink in the ink set of the present invention can be adopted.

Further, as the technical meanings, aspects, amounts, and control means of the content of the resin (a), the white pigment (c), the monofunctional alkyl (meth)acrylate (d), the sugar carboxylate (e), the tack value, and the viscosity in the active energy ray-curable lithographic printing ink of the present invention, the same ones as those described in the description of the white ink in the ink set of the present invention can be adopted.

A method for producing the ink in the ink set of the present invention and the active energy ray-curable lithographic printing ink (hereinafter, also collectively referred to as "ink according to the present invention") of the present invention will be described below. However, the ink in the ink set of the present invention and the active energy ray-curable lithographic printing ink of the present invention are not limited to those produced by the following aspects.

Among the resins (a), a resin having an ethylenically unsaturated group and a hydrophilic group having a main chain structure derived from a resin selected from an acrylic resin, a styrene acrylic resin, and a styrene maleic acid resin can be prepared by the following method. That is, a resin having a hydrophilic group obtained by polymerizing or copolymerizing, with use of a radical polymerization initiator, a compound selected from: a carboxyl group-containing monomer such as (meth)acrylic acid, itaconic acid, crotonic acid, maleic acid, fumaric acid, vinyl acetate, or an acid anhydride thereof; a hydroxyl group-containing monomer such as 2-hydroxyethyl (meth)acrylate; an amino group-containing monomer such as dimethylaminoethyl (meth)acrylate; a mercapto group-containing monomer such as (meth)acrylate 2-(mercaptoacetoxy)ethyl; a sulfo group-containing monomer such as (meth)acryl amide t-butyl sulfonic acid; a phosphate group-containing monomer such as 2-(meth)acryloyloxy ethyl acid phosphate; (meth)acrylic ester; acrylic ester; styrene; acrylonitrile; vinyl acetate; and the like. Further, by the addition reaction of the ethylenically unsaturated compound containing glycidyl group or isocyanate group, acrylic acid chloride, methacrylic acid chloride, or allyl chloride to a mercapto group, an amino group, a hydroxy group, or a carboxyl group which is the active hydrogen-containing group in the resin having the hydroxyl group, a resin having a hydrophilic group and an ethylenically unsaturated group is obtained.

Examples of the ethylenically unsaturated compound having glycidyl group include glycidyl (meth)acrylate, allyl glycidyl ether, glycidyl crotonate, and glycidyl isocrotonate.

In addition, specific examples of the ethylenically unsaturated compound having an isocyanate group include (meth)acryloyl isocyanate, (meth)acryloylethyl isocyanate, and the like.

The ink according to the present invention is obtained by heating and dissolving a resin, a polyfunctional (meth)acrylate, a pigment, and other components at 5°C to 100°C as necessary, and then homogeneously mixing and dispersing them with a stirring/kneading machine such as a kneader, three roll mill, ball mill, planetary ball mill, beads mill, roll mill, attriter, sand mill, gate mixer, paint shaker, homogenizer, or planetary centrifugal mixer. After being mixed and dispersed or during being mixed and dispersed, defoaming in a vacuum or under a reduced pressure is also preferably performed.

The method for producing a printed material according to the present invention includes the steps of: applying at least one of the black/chromatic ink (1) to a substrate using the active energy ray-curable printing ink set according to the present invention; applying the white ink to a substrate coated with the black/chromatic ink (1); and curing the ink using active energy rays.

Examples of the substrate include art paper, coated paper, cast paper, synthetic paper, newsprint paper, aluminum-deposited paper, metal, and plastic film.

A preferable embodiment of the ink according to the present invention is also excellent in transferability and adhesion to a plastic film. Examples of the plastic film include polyethylene terephthalate, polyethylene, polyester, polyamide, polyimide, polystyrene, polypropylene, polycarbonate, and polyvinyl acetal.

Furthermore, examples of the plastic film include, in addition to the plastic film itself, plastic film-laminated paper in which a plastic film is laminated on paper, a metal-deposited plastic film in which a metal such as aluminum, zinc, or copper is deposited on plastic, and the like. Since the present invention is suitable for back printing, a film having transparency is particularly preferable. The film having transparency is preferably any film selected from the group consisting of a polyamide film, a polyester film, a polystyrene film, a polyethylene film, and a polypropylene film.

Further, the plastic film is preferably subjected to a surface treatment, for example, coating of a primer resin, a corona discharge treatment, or a plasma treatment in order to impart adhesiveness.

As a method for applying an ink onto a substrate to be printed in the method for producing a printed material of the present invention, for example, flexographic printing, offset printing (lithographic printing), gravure printing, screen printing, bar coater, or the like can be adopted. In particular, lithographic printing is preferable, and the method of lithographic printing includes water lithographic printing and waterless lithographic printing, and waterless lithographic printing is more preferable.

In the method for producing a printed material of the present invention, in order to prevent the above-described back trapping, it is preferable to lower the tack value according to the printing order, and it is preferable to print the white ink last.

The method for producing a printed material of the present invention preferably includes a step of applying a white ink twice or more. As a result, even when white ink is printed as a base color of a transparent plastic film, the opacity is improved.

In the method for producing a printed material of the present invention, the surface roughness (Ra) of the surface coated with the white ink is preferably 0.1 µm or more and 2.0 µm or less. Within such a range, the back trapping can be effectively prevented.

When the lithographic ink of the present invention has active energy ray curability, the ink coated film on the printed material can be instantly cured by irradiating an active energy ray. The method for producing a printed material according to the present invention includes a step of curing an ink applied on a substrate using an active energy ray. The active energy ray may be any ray as long as it has an excited energy necessary for the curing reaction, and examples preferably include ultraviolet rays and electron beams. Among them, an electron beam is more preferable from the viewpoint of curing sensitivity.

When the curing is conducted by using an electron ray, an electron beam apparatus emitting an energy ray of 100 to 500 eV is preferably used. The absorbed dose of the printed material is preferably 10 kGy or more at which the curing sensitivity of the ink is preferable. In addition, it is preferably 70 kGy or less which has a small influence on the substrate.

In the case of curing with ultraviolet rays, an ultraviolet irradiation device such as a high-pressure mercury lamp, a xenon lamp, a metal halide lamp, or a light emitting diode is preferably used. Among them, it is preferable to use a light emitting diode that emits a bright line having a wavelength of 350 to 420 nm from the viewpoint of power saving and cost reduction.

### [EXAMPLES]

Hereinafter, the present invention will be specifically described with reference to Examples. However, the present invention is not limited thereto.

### [Measuring·evaluating method and processing method]

### (1) Weight average molecular weight

The weight average molecular weight of the resin is measured by gel permeation chromatography (GPC) using tetrahydrofuran as a mobile phase. For the column, the resin was fractionated using Shodex KF-803, and the weight average molecular weight was calculated using a calibration curve by polystyrene.

### (2) Tack value of ink

Measurement was performed according to 4.2 of JIS K 5701-1(2000). 1.31 mL of ink weighed with an ink pipette was measured at a rotational speed of 400 rpm at 38°C using an inkometer ("INKO-GRAPH" TYPE V manufactured by TESTER SANGYO CO,. LTD.). The measured value 1 minute after the start of measurement was taken as the tack value in the present invention.

In each of the examples and comparative examples (each ink set), among the differences in the tack value between the black ink, the cyan ink, the magenta ink, and the yellow ink, the one having the smallest difference and the one having the largest difference are shown in the table in the form of "minimum value of difference in tack value - maximum value of difference in tack value".

### (3) Viscosity of ink

A cone plate (Cone angle: 1°, φ: 40 mm) was mounted on rheometer (MCR301 manufactured by Anton Paar), and the viscosity at 35°C, 0.5 rpm and the viscosity at 50 rpm of 0.35 ml of white ink weighed by an ink pipette.

### (4) Waterless printing

A waterless lithographic printing plate (TAC-VG5, manufactured by Toray Industries, Inc.) was mounted on an offset rotary printing machine (CI-8, manufactured by COMEXI) having an eight-cylinder structure, and a test pattern (175 line: 1% to 50% halftone dot, thin line having a width of 30 µm, independent point having a diameter of 120 µm, punched line having a width of 300 µm, and solid portion) was printed on a polyester film (PTM 12 manufactured by Unitika Inc.) having a thickness of 12 µm by 1,000 m back-printing with the ink specified in each of examples and comparative examples at a printing temperature of 30°C, a printing speed of 200 m/min, and an ink supply amount of 50%. Thereafter, the film was irradiated with an electron beam at an accelerating voltage of 110 kV and a dose of 30 kGy to cure the ink, and thus a printed material was obtained.

In each of the examples and comparative examples, an ink of black color was used for a first cylinder of the printing machine, an ink of cyan color was used for a second cylinder, an ink of magenta color was used for a third cylinder, an ink of yellow color was used for a fourth cylinder, an white ink was used for a sixth cylinder, and a second white ink was used for a seventh cylinder (refer to Example 10).

### (5) Surface roughness of printed material

An arithmetic average roughness Ra defined in JIS B 0601 (2013) was measured for an exposed surface of a cured ink of a white solid portion of a printed material by a printing method (4) using a laser microscope (VK 9700 manufactured by KEYENCE CORPORATION).

### (6) Back trapping

The reflection density of a solid part printed with only each single color of the black ink, the cyan ink, the magenta ink, and the yellow ink and the solid part printed with two types of each single color and the white ink superimposed in this order as viewed from a printed display surface side, that is, the film surface side in the test pattern printed in the above (4) was measured using a reflection densitometer ("SpectroEye" manufactured by GretagMacbeth) with the high-quality paper as a reference (reflection density 0). Among the black color, the cyan color, the magenta color, and the yellow color, the color having the largest difference in reflection density was used as data for evaluation, and evaluation was performed according to the following criteria. The smaller the difference in the reflection density, the more the back trapping by the white ink can be suppressed.
C (bad): The difference in reflection density is greater than 0.3.
B (good): The difference in reflection density is 0.3 or lower.
A (better): The difference in reflection density is 0.2 or less.
AA (very good): The difference in reflection density is 0.1 or less.

### (7) Opacity

The opacity was evaluated for a white solid portion in the test pattern printed in the above (4). A printed material to be evaluated was placed on a opacity rate test paper ("byko-chart" manufactured by BYK-Chemie GmbH) so that the printed display surface side, that is, the film surface side was the front side, and the opacity rate was measured using a reflection densitometer ("SpectroEye" manufactured by GretagMacbeth GmbH) and evaluated according to the following criteria.
C (bad): The opacity rate is less than 35%.
B (good): The opacity rate is 35% or more.
A (better): The opacity rate is 45% or more.
AA (very good): The opacity rate is 55% or more.

### (8) Anti-scumming

A test pattern was printed by the printing method (4). However, for the white ink, the ink supply amount was adjusted so that the opacity rate of the white solid portion was 65%. The white density in a non-image area adjacent to a white solid portion of the test pattern was measured using a reflection densitometer (SpectroEye from GretagMacbeth) with a black paper (Marubeni-paper pulp sales, dark color paper black) as a reference, and evaluated according to the following criteria.
C (bad): The reflection density exceeds 0.20.
B (good): The reflection density is 0.20 or less.
A (better): The reflection density is 0.10 or less.
AA (very good): The reflection density is 0.05 or less.

### <Starting materials for ink>

### [Resin (a)]

Resin 1: An addition reaction, in which 0.6 equivalents of glycidyl methacrylate were combined with carboxyl groups in a copolymer of 25 mass% of methyl methacrylate, 25 mass% of styrene, and 50 mass% of methacrylic acid, gave a resin 1 having an ethylenically unsaturated group and a hydrophilic group. The obtained resin 1 had a weight average molecular weight of 34,000, an acid value of 102 mgKOH/g, and an iodine number of 2.0 mol/kg.

### [Polyfunctional (meth)acrylate (b)]

(b)1: A mixture of pentaerythritol triacrylate and pentaerythritol tetraacrylate "Miramer" (registered trademark) M340 (manufactured by MIWON).
(b)2: Tricyclodecane dimethanol diacrylate "Miramer" (registered trademark) M 262 (manufactured by MIWON)
(b)3: 1,10-decanediol diacrylate (NK ESTER A-DOD-N manufactured by Shin-Nakamura Chemical Co., Ltd.).

### [Monofunctional alkyl (meth)acrylate (d)]

(d)1: Isodecyl acrylate (manufactured by Tokyo Chemical Industry Co., Ltd.) having 10 carbon atoms
(d)2: Lauryl acrylate (manufactured by Wako Pure Chemical Industries, Ltd.) having 12 carbon atoms
(d)3: tetradecyl acrylate (manufactured by Tokyo Chemical Industry Co., Ltd.) having 14 carbon atoms
(d)4: Octadecyl acrylate (Light acrylate S-A manufactured by Kyoeisha Chemical Co., Ltd.) having 18 carbon atoms
(d)5: Docosyl acrylate (manufactured by Tokyo Chemical Industry Co., Ltd.) having 22 carbon atoms

### [Pigment]

Pigment 1: black pigment "MOGUL" E (manufactured by CABOT)
Pigment 2: Cyan pigment Seika Cyanine Blue 4920 (manufactured by Dainichiseika Color & Chemicals Mfg. Co., Ltd.)
Pigment 3: Magenta pigment "LIONOL" RED TT 5701 G (manufactured by Toyocolor Co., Ltd.)
Pigment 4: Yellow pigment "LIONOL" YELLOW TT 1405 G (manufactured by Toyocolor Co., Ltd.)
Pigment 5: White pigment (c) "TIPAQUE" CR58-2 (manufactured by Ishihara Sangyo Kaisha, Ltd.)

### [Extender Pigment]

Mica Powder A-11 (manufactured by YAMAGUCHI MICA CO., LTD.).

### [Surfactant]

Surfactant 1: "DISPERBYK" (registered trademark) 2013 (manufactured by BYK Chemie Ltd. Japan)
Surfactant 2: "Solsperse" (registered trademark) 36000 (manufactured by Lubrizol Corporation)
Surfactant 3: "Solsperse" (registered trademark) 54000 (manufactured by Lubrizol Corporation)

### [Other additives]

Additive 1: Sucrose benzoate "Miramer" (registered trademark) SB (manufactured by MIWON) as a sugar carboxylate.

### [Example 1]

With the ink composition shown in Table 1, a resin (a), polyfunctional (meth)acrylate (b), monofunctional alkyl (meth)acrylate, a pigment, an extender pigment, and a surfactant were weighed, and kneaded at a speed of 500 rpm at a gap 1 using a three-roll mill ("EXAKT" (registered trademark) M-80S manufactured by EXAKT) to obtain a black ink 1. In addition, a cyan ink 3, a magenta ink 5, a yellow ink 7, and a white ink 10 were obtained in the same manner as in the ink 1 except that raw materials were weighed according to the ink compositions shown in Table 1 or 2, respectively. These five types of inks were used as an ink set 1.

Using the obtained ink set 1, the waterless printing of the above (4) was performed in the printing order shown in Table 3 to print a test pattern.

The evaluation results of the ink and printing are shown in Tables 1 to 3. In the ink set 1, all the tack values of the ink of black or chromatic color were 5.0 or more and 12.0 or less, and the tack value of the white ink was 1.0 or more and 5.0 or less, and thus all of the back trapping, the opacity, and the anti-scumming were good.

### [Example 2]

A yellow ink 8 was obtained in the same manner as in the ink 1 except that raw materials were weighed with the ink composition shown in Table 1. An ink set 2 was obtained by combining this with the ink 1 of black color, the ink 3 of cyan color, the ink 5 of magenta color, and the ink 10 of white color.

Using the obtained ink set 2, a test pattern for color was printed in the same manner as in Example 1.

In the ink set 2, since the difference in tack value between all the inks of black or chromatic color and the white ink was 2.0 or more, the back trapping and the opacity were better.

### [Example 3]

A white ink 11 was obtained in the same manner as in the ink 1 except that raw materials were weighed with the ink composition shown in Table 2. An ink set 3 was obtained by combining this with the ink 1 of black color, the ink 3 of cyan color, the ink 5 of magenta color, and the ink 8 of yellow color.

Using the obtained ink set 3, a test pattern for color was printed in the same manner as in Example 1.

In the ink set 3, the monofunctional alkyl (meth)acrylate (d) in the white ink had 10 carbon atoms, the back trapping was good, and the opacity was better.

### [Examples 4 and 5]

White inks 12 and 13 were obtained in the same manner as in the ink 1 except that raw materials were weighed with the ink composition shown in Table 2. An ink set 4 and an ink set 5 were obtained by combining this with the ink 1 of black color, the ink 3 of cyan color, the ink 5 of magenta color, and the ink 8 of yellow color.

Using the obtained ink set 4 and ink set 5, a test pattern for color was printed in the same manner as in Example 1.

The ink set 4 and the ink set 5 also had better back trapping and opacity.

### [Example 6]

A white ink 14 was obtained in the same manner as in the ink 1 except that raw materials were weighed with the ink composition shown in Table 2. An ink set 6 was obtained by combining this with the ink 1 of black color, the ink 3 of cyan color, the ink 5 of magenta color, and the ink 8 of yellow color.

Using the obtained ink set 6, a test pattern for color was printed in the same manner as in Example 1.

In the ink set 6, the monofunctional alkyl (meth)acrylate (d) in the white ink had 22 carbon atoms, the opacity was good, and the back trapping was better.

### [Example 7]

A white ink 15 was obtained in the same manner as in the ink 1 except that raw materials were weighed with the ink composition shown in Table 2. An ink set 7 was obtained by combining this with the ink 1 of black color, the ink 3 of cyan color, the ink 5 of magenta color, and the ink 8 of yellow color.

Using the obtained ink set 7, a test pattern for color was printed in the same manner as in Example 1.

In the ink set 7, since the tack value of the white ink was 3.4, the minimum value of the difference between the tack values was 3.6 in the combination with the ink of black or chromatic color, the maximum value of the difference between the tack values was 4.9, and the difference between the tack values was 3.0 or more and 7.0 or less in the combination of all the inks of black or chromatic color and the white ink, the back trapping was very good, and the opacity and the anti-scumming were better.

### [Example 8]

A white ink 16 was obtained in the same manner as in the ink 1 except that raw materials were weighed with the ink composition shown in Table 2. An ink set 8 was obtained by combining this with the ink 1 of black color, the ink 3 of cyan color, the ink 5 of magenta color, and the ink 8 of yellow color.

Using the obtained ink set 8, a test pattern for color was printed in the same manner as in Example 1.

In the ink set 8, since the tack value of the white ink was 2.0, the back trapping was very good.

### [Example 9]

A white ink 17 was obtained in the same manner as in the ink 1 except that raw materials were weighed with the ink composition shown in Table 2. An ink set 9 was obtained by combining this with the ink 1 of black color, the ink 3 of cyan color, the ink 5 of magenta color, and the ink 8 of yellow color.

Using the obtained ink set 9, a test pattern for color was printed in the same manner as in Example 1.

In the ink set 9, since the white ink contained a sugar carboxylate, the back trapping and the anti-scumming were very good, and the opacity was better.

### [Example 10]

A test pattern for color was printed in the same manner as in Example 1 except that white ink was printed twice using the ink set 7.

In the present example, since the printing with a white ink was performed twice, the back trapping and the opacity were very good, and the anti-scumming was better.

### [Example 11]

An black ink 2, a cyan ink 4, a magenta ink 6, and a yellow ink 9 were obtained in the same manner as in the ink 1 except that raw materials were weighed with the ink compositions shown in Table 1. These and the white ink 10 were combined to form an ink set 10.

Using the obtained ink set 10, a test pattern for color was printed in the same manner as in Example 1.

In the ink set 10, since the difference in tack value between all the inks of black or chromatic color and the white ink was 3.0 or more, the back trapping was very good, and the opacity was better.

### [Comparative Example 1]

A white ink 18 was obtained in the same manner as in the ink 1 except that raw materials were weighed with the ink composition shown in Table 2. An ink set 11 was obtained by combining this with the ink 2 of black color, the ink 4 of cyan color, the ink 6 of magenta color, and the ink 9 of yellow color.

Using the obtained ink set 11, a test pattern for color was printed in the same manner as in Example 1.

Since the tack value of the white ink was 6.5, the ink set 11 had bad back trapping, opacity, and anti-scumming.

### [Comparative Example 2]

A black ink 19 was obtained in the same manner as in the ink 1 except that raw materials were weighed with the ink composition shown in Table 1. This and the white ink 10 were combined to form an ink set 12.

Using the obtained ink set 12, a test pattern for color was printed in the same manner as in Example 1.

Since the tack value of the black ink was 4.0, the ink set 12 had bad back trapping, opacity, and anti-scumming.

**[Table 1-1]**

| Ink name | | Ink 1 | Ink 2 | Ink 3 | Ink 4 | Ink 5 |
|---|---|---|---|---|---|---|
| In composition (parts by mass) | Resin | 13.4 | 13.0 | 12.7 | 12.5 | 13.4 |
| | (b) 1 | 39.3 | 41.5 | 42.2 | 43.8 | 41.3 |
| | (b) 2 | 24.3 | 25.5 | 23.1 | 24.7 | 24.3 |
| | (b) 3 | 3.0 | - | 3.0 | - | 3.0 |
| | (d) 1 | - | - | - | - | - |
| | (d) 2 | - | - | - | - | - |
| | (d) 3 | - | - | - | - | - |
| | (d) 4 | - | - | - | - | - |
| | (d) 5 | - | - | - | - | - |
| | Pigment 1 | 18.0 | 18.0 | - | - | - |
| | Pigment 2 | - | - | 18.0 | 18.0 | - |
| | Pigment 3 | - | - | - | - | 16.0 |
| | Pigment 4 | - | - | - | - | - |
| | Pigment 5 | - | - | - | - | - |
| | Extender pigment | 1.0 | 1.0 | 1.0 | 1.0 | 1.0 |
| | Surfactant 1 | 1.0 | 1.0 | - | - | - |
| | Surfactant 2 | - | - | - | - | 1.0 |
| | Surfactant 3 | - | - | - | - | - |
| | Additive 1 | - | - | - | - | - |
| Ink properties | Tack value | 8.3 | 10.4 | 7.5 | 9.8 | 7.3 |

**[Table 1-2]**

| Ink name | | Ink 6 | Ink 7 | Ink 8 | Ink 9 | Ink 19 |
|---|---|---|---|---|---|---|
| In composition (parts by mass) | Resin | 13.2 | 13.0 | 13.0 | 12.7 | 8.7 |
| | (b) 1 | 42.9 | 41.0 | 43.0 | 45.2 | 42.7 |
| | (b) 2 | 25.9 | 23.0 | 24.0 | 25.1 | 25.6 |
| | (b) 3 | - | 6.0 | 3.0 | - | 3.0 |
| | (d) 1 | - | - | - | - | - |
| | (d) 2 | - | - | - | - | - |
| | (d) 3 | - | - | - | - | - |
| | (d) 4 | - | - | - | - | - |
| | (d) 5 | - | - | - | - | - |
| | Pigment 1 | - | - | - | - | 18.0 |
| | Pigment 2 | - | - | - | - | - |
| | Pigment 3 | 16.0 | - | - | - | - |
| | Pigment 4 | - | 16.0 | 16.0 | 16.0 | - |
| | Pigment 5 | - | - | - | - | - |
| | Extender pigment | 1.0 | 1.0 | 1.0 | 1.0 | 1.0 |
| | Surfactant 1 | - | - | - | - | 1.0 |
| | Surfactant 2 | 1.0 | - | - | - | - |
| | Surfactant 3 | - | - | - | - | - |
| | Additive 1 | - | - | - | - | - |
| Ink properties | Tack value | 9.7 | 5.5 | 7.0 | 7.9 | 4.0 |

**[Table 2-1]**

| Ink name | | Ink 10 | Ink 11 | Ink 12 | Ink 13 | Ink 14 |
|---|---|---|---|---|---|---|
| | Resin | 7.3 | 7.3 | 7.3 | 7.3 | 7.3 |
| | (b) 1 | 28.1 | 28.1 | 28.1 | 28.1 | 28.1 |
| | (b) 2 | 16.6 | 16.6 | 16.6 | 16.6 | 16.6 |
| | (b) 3 | - | - | - | - | - |
| | (d) 1 | - | 1.0 | - | - | - |
| | (d) 2 | - | - | 1.0 | - | - |
| | (d) 3 | - | - | - | 1.0 | - |
| | (d) 4 | 1.0 | - | - | - | - |
| | (d) 5 | - | - | - | - | 1.0 |
| In composition (parts by mass) | Pigment 1 | - | - | - | - | - |
| | Pigment 2 | - | - | - | - | - |
| | Pigment 3 | - | - | - | - | - |
| | Pigment 4 | - | - | - | - | - |
| | Pigment 5 | 45.0 | 45.0 | 45.0 | 45.0 | 45.0 |
| | Extender pigment | 1.0 | 1.0 | 1.0 | 1.0 | 1.0 |
| | Surfactant 1 | - | - | - | - | - |
| | Surfactant 2 | - | - | - | - | - |
| | Surfactant 3 | 1.0 | 1.0 | 1.0 | 1.0 | 1.0 |
| | Additive 1 | - | - | - | - | - |
| Ink properties | Tack value | 4.4 | 4.9 | 4.5 | 4.5 | 4.1 |

**[Table 2-2]**

| Ink name | | Ink 15 | Ink 16 | Ink 17 | Ink 18 |
|---|---|---|---|---|---|
| | Resin | 7.3 | 7.3 | 6.5 | 7.8 |
| | (b) 1 | 26.9 | 25.0 | 25.5 | 28.4 |
| | (b) 2 | 15.8 | 14.7 | 15.0 | 16.8 |
| | (b) 3 | - | - | - | - |
| | (d) 1 | - | - | - | - |
| | (d) 2 | - | - | - | - |
| | (d) 3 | - | - | - | - |
| | (d) 4 | 3.0 | 6.0 | 3.0 | - |
| In composition (parts by mass) | (d) 5 | - | - | - | - |
| | Pigment 1 | - | - | - | - |
| | Pigment 2 | - | - | - | - |
| | Pigment 3 | - | - | - | - |
| | Pigment 4 | - | - | - | - |
| | Pigment 5 | 45.0 | 45.0 | 45.0 | 45.0 |
| | Extender pigment | 1.0 | 1.0 | 1.0 | 1.0 |
| | Surfactant 1 | - | - | - | - |
| | Surfactant 2 | - | - | - | - |
| | Surfactant 3 | 1.0 | 1.0 | 1.0 | 1.0 |
| | Additive 1 | - | - | 3.0 | - |
| Ink properties | Tack value | 3.4 | 2.0 | 3.9 | 6.5 |

**[Table 3]**

| | | Example 1 | Example 2 | Example 3 | Example 4 | Example 5 | Example 6 |
|---|---|---|---|---|---|---|---|
| Ink set name | | Ink set 1 | Ink set 2 | Ink set 3 | Ink set 4 | Ink set 5 | Ink set 6 |
| Order of printing | 1 | Ink 1 | Ink 1 | Ink 1 | Ink 1 | Ink 1 | Ink 1 |
| | 2 | Ink 3 | Ink 3 | Ink 3 | Ink 3 | Ink 3 | Ink 3 |
| | 3 | Ink 5 | Ink 5 | Ink 5 | Ink 5 | Ink 5 | Ink 5 |
| | 4 | Ink 7 | Ink 8 | Ink 8 | Ink 8 | Ink 8 | Ink 8 |
| | 5 | Ink 10 | Ink 10 | Ink 11 | Ink 12 | Ink 13 | Ink 14 |
| | 6 | - | - | - | - | - | - |
| Difference in tack value | | 1.1-3.9 | 2.6-3.9 | 2.1-3.4 | 2.5-3.8 | 2.5-3.8 | 2.9-4.2 |
| White ink properties | η_{WT0.5} (Pa·s) | 17.2 | 17.2 | 19.0 | 18.0 | 17.5 | 15.0 |
| | η_{WT50}(Pa·s) | 14.0 | 14.0 | 16.0 | 15.0 | 14.5 | 11.0 |
| | η_{WT50}/η_{WT0.5} | 0.81 | 0.81 | 0.84 | 0.83 | 0.83 | 0.73 |
| Surface roughness of printed material (µm) | | 1.4 | 1.1 | 1.3 | 1.2 | 1.2 | 1.4 |
| Printing quality | Back trapping | B | A | B | A | A | A |
| | Opacity | B | A | A | A | A | B |
| | Anti-scumming | B | B | B | B | B | B |

**[Table 4]**

| | | Example 7 | Example 8 | Example 9 | Example 10 | Example 11 | Comparative Example 1 | Comparative Example 2 |
|---|---|---|---|---|---|---|---|---|
| Ink set name | | Ink set 7 | Ink set 8 | Ink set 9 | Ink set 7 | Ink set 10 | Ink set 11 | Ink set 12 |
| Order of printing | 1 | Ink 1 | Ink 1 | Ink 1 | Ink 1 | Ink 2 | Ink 2 | Ink 19 |
| | 2 | Ink 3 | Ink 3 | Ink 3 | Ink 3 | Ink 4 | Ink 4 | Ink 10 |
| | 3 | Ink 5 | Ink 5 | Ink 5 | Ink 5 | Ink 6 | Ink 6 | - |
| | 4 | Ink 8 | Ink 8 | Ink 8 | Ink 8 | Ink 9 | Ink 9 | - |
| | 5 | Ink 15 | Ink 16 | Ink 17 | Ink 15 | Ink 10 | Ink 18 | - |
| | 6 | - | - | - | Ink 15 | - | - | - |
| Difference in tack value | | 3.6-4.9 | 5.0-6.3 | 3.1-4.4 | 3.6-4.9 | 3.5-6.0 | 1.4-3.9 | 0.4 |
| White ink properties | η_{WT0.5} (Pa·s) | 13.3 | 11.9 | 15.8 | 13.3 | 17.2 | 19.8 | 17.2 |
| | η_{WT50} (Pa·s) | 11.4 | 8.5 | 14.5 | 11.4 | 14.0 | 17.1 | 14.0 |
| | η_{WT50}/η_{WT0.5} | 0.86 | 0.71 | 0.92 | 0.86 | 0.81 | 0.86 | 0.81 |
| Surface roughness of printed material (µm) | | 0.8 | 0.9 | 0.9 | 0.9 | 1.0 | 2.6 | 2.2 |
| Printing quality | Back trapping | AA | AA | AA | AA | AA | C | C |
| | Opacity | A | B | A | AA | A | C | B |
| | Anti-scumming | A | B | AA | A | B | C | C |

## Claims

1. A method for producing a printed material, the method comprising:
a step of applying at least one of a black/chromatic ink (1) on a substrate using an active energy ray-curable printing ink set;
a step of applying a white ink on the substrate to which the black/chromatic ink (1) is applied; and
a step of curing using an active energy ray,
wherein the active energy ray-curable printing ink set comprises
at least one ink of black or chromatic color including at least any one of a black pigment, a cyan pigment, a magenta pigment, and a yellow pigment, and a white ink including a white pigment,
wherein at least one of the ink of black or chromatic color is the black/chromatic ink (1) having a tack value of 5.0 or more and 12.0 or less at 400 rpm measured with an inkometer at 38°C, and the white ink has a tack value of 1.0 or more and 5.0 or less at 400 rpm measured with an inkometer at 38°C.

2. The method for producing a printed material according to claim 1, wherein a difference in tack value at 400 rpm measured with an inkometer at 38°C between at least one of the black/chromatic ink (1) and the white ink is 2.0 or more and 8.0 or less.

3. The method for producing a printed material according to claim 1 or 2, wherein
the white ink contains a resin (a), a polyfunctional (meth)acrylate (b), a white pigment (c), and a monofunctional alkyl (meth)acrylate (d), and
a content of the white pigment (c) is 30 mass% or more and 60 mass% or less with respect to 100 mass% of a total amount of the ink.

4. The method for producing a printed material according to claim 3, wherein an alkyl group of monofunctional alkyl (meth)acrylate (d) has carbon atoms of 12 to 20.

5. The method for producing a printed material according to claim 3 or 4, wherein the weight average molecular weight of the resin (a) is 5,000 or more.

6. The method for producing a printed material according to any one of claims 1 to 5, wherein a viscosity ratio η_{WT50}/η_{WT0.5} of a viscosity η_{WT50} at a rotational speed of 50 rpm to a viscosity η_{WT0.5} at a rotational speed of 0.5 rpm of the white ink measured with a cone-plate rotational viscometer at 35°C is 0.7 or more and 1.0 or less.

7. The method for producing a printed material according to any one of claims 1 to 6, further comprising a step of applying the white ink twice or more.

8. The method for producing a printed material according to any one of claims 1 to 7, wherein the substrate is a film having transparency.

9. The method for producing a printed material according to claim 8, wherein the film having transparency is any film selected from the group consisting of a polyamide film, a polyester film, a polystyrene film, a polyethylene film, and a polypropylene film.

10. The method for producing a printed material according to any one of claims 1 to 9, wherein the active energy ray is an electron beam.

11. An active energy ray-curable lithographic printing ink comprising:
a resin (a);
a polyfunctional (meth)acrylate (b);
a white pigment (c); and
a monofunctional alkyl (meth)acrylate (d),
wherein a content of the white pigment (c) is 30 mass% or more and 60 mass% or less with respect to 100 mass% of a total amount of the ink, a viscosity ratio η_{WT50}/η_{WT0.5} of a viscosity η_{WT50} at a rotational speed of 50 rpm to a viscosity η_{WT0.5} at a rotational speed of 0.5 rpm measured by a cone-plate rotational viscometer at 35°C is 0.7 or more and 1.0 or less, and a tack value at 400 rpm measured by an inkometer at 38°C is 1.0 or more and 5.0 or less.

12. The active energy ray-curable lithographic printing ink according to claim 11, wherein the weight average molecular weight of the resin (a) is 5,000 or more.

## Patentansprüche

1. Verfahren zur Herstellung eines bedruckten Materials, wobei das Verfahren umfasst:
einen Schritt des Aufbringens von mindestens einer schwarzen/chromatischen Tinte (1) auf ein Substrat unter Verwendung eines Aktivenergiestrahlen-härtbaren Drucktintensatzes;
einen Schritt des Aufbringens einer weißen Tinte auf das Substrat, auf das die schwarze/chromatische Tinte (1) aufgebracht wird; und
einen Schritt des Härtens unter Verwendung eines Aktivenergiestrahls,
wobei der Aktivenergiestrahlen-härtbaren Drucktintensatz
mindestens eine Tinte mit schwarzer oder chromatischer Farbe, die mindestens eines von einem schwarzen Pigment, einem cyanfarbenen Pigment, einem magentafarbenen Pigment und einem gelben Pigment enthält, und eine weiße Tinte, die ein weißes Pigment enthält, umfasst,
wobei mindestens eine der Tinte mit schwarzer oder chromatischer Farbe die schwarze/chromatische Tinte (1) ist, die einen Tack-Wert von 5,0 oder mehr und 12,0 oder weniger bei 400 U/min, gemessen mit einem Inkometer bei 38 °C, aufweist, und die weiße Tinte einen Tack-Wert von 1,0 oder mehr und 5,0 oder weniger bei 400 U/min, gemessen mit einem Inkometer bei 38 °C, aufweist.

2. Verfahren zur Herstellung eines bedruckten Materials gemäß Anspruch 1, wobei eine Differenz des Tack-Werts bei 400 U/min, gemessen mit einem Inkometer bei 38 °C, zwischen mindestens einer der schwarzen/chromatischen Tinte (1) und der weißen Tinte 2,0 oder mehr und 8,0 oder weniger beträgt.

3. Verfahren zur Herstellung eines bedruckten Materials gemäß Anspruch 1 oder 2, wobei
die weiße Tinte ein Harz (a), ein polyfunktionelles (Meth)acrylat (b), ein weißes Pigment (c) und ein monofunktionelles Alkyl(meth)acrylat (d) enthält, und
ein Gehalt des weißen Pigments (c) 30 Massen-% oder mehr und 60 Massen-% oder weniger, bezogen auf 100 Massen-% einer Gesamtmenge der Tinte, beträgt.

4. Verfahren zur Herstellung eines bedruckten Materials gemäß Anspruch 3, wobei eine Alkylgruppe des monofunktionellen Alkyl(meth)acrylats (d) zwischen 12 und 20 Kohlenstoffatome aufweist.

5. Verfahren zur Herstellung eines bedruckten Materials gemäß Anspruch 3 oder 4, wobei das gewichtsmittlere Molekulargewicht des Harzes (a) 5.000 oder mehr beträgt.

6. Verfahren zur Herstellung eines bedruckten Materials gemäß einem der Ansprüche 1 bis 5, wobei ein Viskositätsverhältnis η_{WT50}/η_{WT0,5} einer Viskosität η_{WT50} bei einer Rotationsgeschwindigkeit von 50 U/min zu einer Viskosität η_{WT0,5} bei einer Rotationsgeschwindigkeit von 0,5 U/min der weißen Tinte, gemessen mit einem Kegel-Platte-Rotationsviskosimeter bei 35 °C, 0,7 oder mehr und 1,0 oder weniger beträgt.

7. Verfahren zur Herstellung eines bedruckten Materials gemäß einem der Ansprüche 1 bis 6, ferner umfassend einen Schritt des zwei- oder mehrmaligen Aufbringens der weißen Tinte.

8. Verfahren zur Herstellung eines bedruckten Materials gemäß einem der Ansprüche 1 bis 7, wobei das Substrat ein Film mit Transparenz ist.

9. Verfahren zur Herstellung eines bedruckten Materials gemäß Anspruch 8, wobei der Film mit Transparenz ein beliebiger Film ist, ausgewählt aus der Gruppe bestehend aus einem Polyamidfilm, einem Polyesterfilm, einem Polystyrolfilm, einem Polyethylenfilm und einem Polypropylenfilm.

10. Verfahren zur Herstellung eines bedruckten Materials gemäß einem der Ansprüche 1 bis 9, wobei der Aktivenergiestrahl ein Elektronenstrahl ist.

11. Aktivenergiestrahlen-härtbare lithographische Drucktinte, umfassend:
ein Harz (a);
ein polyfunktionelles (Meth)Acrylat (b);
ein weißes Pigment (c); und
ein monofunktionelles Alkyl(meth)acrylat (d),
wobei ein Gehalt des weißen Pigments (c) 30 Massen-% oder mehr und 60 Massen-% oder weniger, bezogen auf 100 Massen-% einer Gesamtmenge der Tinte, beträgt, ein Viskositätsverhältnis η_{WT50}/η_{WT0,5} einer Viskosität η_{WT50} bei einer Rotationsgeschwindigkeit von 50 U/min zu einer Viskosität η_{WT0,5} bei einer Rotationsgeschwindigkeit von 0,5 U/min, gemessen mit einem Kegel-Platte-Rotationsviskosimeter bei 35 °C, 0,7 oder mehr und 1,0 oder weniger beträgt, und ein Tack-Wert bei 400 U/min, gemessen mit einem Inkometer bei 38 °C, 1,0 oder mehr und 5,0 oder weniger beträgt.

12. Aktivenergiestrahlen-härtbare lithographische Drucktinte gemäß Anspruch 11, wobei das gewichtsmittlere Molekulargewicht des Harzes (a) 5.000 oder mehr beträgt.

## Revendications

1. Procédé de fabrication d'un matériau imprimé, le procédé comprenant :
une étape d'application d'au moins une encre noire/chromatique (1) sur un substrat en utilisant un ensemble d'encres d'impression durcissable par rayonnement d'énergie active ;
une étape d'application d'une encre blanche sur le substrat sur lequel l'encre noire/chromatique (1) est appliquée ; et
une étape de durcissement en utilisant un rayonnement d'énergie active,
où l'ensemble d'encres d'impression durcissable par rayonnement d'énergie active comprend
au moins une encre de couleur noire ou chromatique contenant au moins l'un d'un pigment noir, d'un pigment cyan, d'un pigment magenta et d'un pigment jaune, et une encre blanche contenant un pigment blanc,
où au moins l'une de l'encre de couleur noire ou chromatique est l'encre noire/chromatique (1) ayant une valeur d'adhésivité de 5,0 ou plus et de 12,0 ou moins à 400 tr/min mesurée avec un inkomètre à 38 °C, et l'encre blanche a une valeur d'adhésivité de 1,0 ou plus et de 5,0 ou moins à 400 tr/min mesurée avec un inkomètre à 38 °C.

2. Procédé de fabrication d'un matériau imprimé selon la revendication 1, où une différence de valeur d'adhésivité à 400 tr/min mesurée avec un inkomètre à 38 °C entre au moins l'une de l'encre noire/chromatique (1) et l'encre blanche est de 2,0 ou plus et de 8,0 ou moins.

3. Procédé de fabrication d'un matériau imprimé selon la revendication 1 ou 2, où
l'encre blanche contient une résine (a), un (méth)acrylate polyfonctionnel (b), un pigment blanc (c) et un (méth)acrylate d'alkyle monofonctionnel (d), et
une teneur du pigment blanc (c) est de 30 % en masse ou plus et de 60 % en masse ou moins sur la base de 100 % en masse d'une quantité totale de l'encre.

4. Procédé de fabrication d'un matériau imprimé selon la revendication 3, où un groupe alkyle du (méth)acrylate d'alkyle monofonctionnel (d) a entre 12 et 20 atomes de carbone.

5. Procédé de fabrication d'un matériau imprimé selon la revendication 3 ou 4, où le poids moléculaire moyen en poids de la résine (a) est de 5 000 ou plus.

6. Procédé de fabrication d'un matériau imprimé selon l'une quelconque des revendications 1 à 5, où un rapport de viscosité η_{WT50}/η_{WT0,5} d'une viscosité η_{WT50} à une vitesse de rotation de 50 tr/min à une viscosité η_{WT0,5} à une vitesse de rotation de 0,5 tr/min de l'encre blanche mesurée avec un viscosimètre rotatif cône-plaque à 35 °C est de 0,7 ou plus et de 1,0 ou moins.

7. Procédé de fabrication d'un matériau imprimé selon l'une quelconque des revendications 1 à 6, comprenant en outre une étape d'application de l'encre blanche deux fois ou plus.

8. Procédé de fabrication d'un matériau imprimé selon l'une quelconque des revendications 1 à 7, où le substrat est un film transparent.

9. Procédé de fabrication d'un matériau imprimé selon la revendication 8, où le film transparent est n'importe quel film choisi dans le groupe consistant en un film de polyamide, un film de polyester, un film de polystyrène, un film de polyéthylène et un film de polypropylène.

10. Procédé de fabrication d'un matériau imprimé selon l'une quelconque des revendications 1 à 9, où le rayonnement d'énergie active est un faisceau d'électrons.

11. Encre d'impression lithographique durcissable par rayonnement d'énergie active comprenant :
une résine (a) ;
un (méth)acrylate polyfonctionnel (b) ;
un pigment blanc (c) ; et
un (méth)acrylate d'alkyle monofonctionnel (d),
où une teneur du pigment blanc (c) est de 30 % en masse ou plus et de 60 % en masse ou moins sur la base de 100 % en masse d'une quantité totale de l'encre, un rapport de viscosité η_{WT50}/η_{WT0,5} d'une viscosité η_{WT50} à une vitesse de rotation de 50 tr/min à une viscosité η_{WT0,5} à une vitesse de rotation de 0,5 tr/min mesurée avec un viscosimètre rotatif cône-plaque à 35 °C est de 0,7 ou plus et de 1,0 ou moins, et une valeur d'adhésivité à 400 tr/min mesurée avec un inkomètre à 38 °C est de 1,0 ou plus et de 5,0 ou moins.

12. Encre d'impression lithographique durcissable par rayonnement d'énergie active selon la revendication 11, où le poids moléculaire moyen en poids de la résine (a) est de 5 000 ou plus.
